# EUROPÄISCHE PATENTSCHRIFT

(11) **EP 0 807 256 B1**
(45) Veröffentlichungstag und Bekanntmachung des Hinweises auf die Patenterteilung: **04.07.2001**
(21) Anmeldenummer: 96901691.4
(22) Anmeldetag: 01.02.1996
(51) Int. Cl.: G01P 3/487

(54) **EINRICHTUNG ZUR DREHZAHLMESSUNG ODER DREHRICHTUNGSERKENNUNG EINES DREHMAGNETFELDES**
DEVICE FOR MEASURING THE ROTATION SPEED OR DETECTING THE DIRECTION OF ROTATION OF A ROTARY MAGNETIC FIELD
DISPOSITIF PERMETTANT DE MESURER LA VITESSE DE ROTATION OU DE DETECTER LE SENS DE ROTATION D'UN CHAMP MAGNETIQUE ROTATIF

(30) Priorität: 02.02.1995 DE 19503376
(43) Veröffentlichungstag der Anmeldung: 19.11.1997
(73) Patentinhaber: SIEMENS AKTIENGESELLSCHAFT, 80333 München (DE)
(72) Erfinder: JÄGER, Heimo, A-2351 Wr. Neudorf (AT); KÖSTLER, Werner, A-1180 Wien (AT)
(86) Internationale Anmeldenummer: DE9600153
(87) Internationale Veröffentlichungsnummer: WO9624067

(56) Entgegenhaltungen:
- EP-A- 0 575 971
- US-A- 4 110 676
- US-A- 4 857 784
- US-A- 5 070 298

## Beschreibung

Die Erfindung betrifft eine Einrichtung zur Drehzahlmessung oder Drehrichtungserkennung eines Drehmagnetfeldes mit Hilfe eines Hallsensors.

Eine bekannte Einrichtung (EP 0 363 738 B1) weist eine Halterung auf, die den Hallsensor derart hält, daß ein Magnetfeld gut erfaßt werden kann. Der Hallsensor ist über elektrische Kontakte, die durch den Halter hindurchgeführt sind, mit einer Auswerteschaltung auf einer Leiterplatte verbunden. Ein solcher Halter ist jedoch sehr aufwendig in seiner Herstellung. Außerdem muß der Hallsensor aufwendig justiert werden.

Eine weitere bekannte Einrichtung zur Drehzahlmessung oder Drehrichtungserkennung eines Drehmagnetfeldes (US 4,110,676) weist eine sich drehende Rotorachse auf, an der ein Magnetrad befestigt ist. Die N- und S-Pole des Magnetrades sind dabei so angeordnet, daß die Magnetisierungsrichtung und damit das Magnetfeld radial gerichtet ist. Zusätzlich ist parallel zu den Feldlinien ein Magnetflußführungselement vorgesehen, das die Magnetfeldlinien auf einen Hallsensor bündelt. Bei dieser Einrichtung muß der Hallsensor senkrecht zu den Feldlinien und zu dem Magnetflußführungselement angeordnet sein. Die Magnetfeldlinien werden durch das Magnetflußführungselement nicht umgelenkt.

Durch die US-A-4 857 784 ist ein Elektromotor mit einer Drehfeldmessung zwischen einem rotorseitigen Magnetrad mit Magnetpolen in einer Ebene senkrecht zu der Rotorachse und einem Hall-Element auf einer Leiterplatte bekannt, wobei die Sensorfläche senkrecht zur Leiterplatte und parallel dicht zur Umfangsfläche des Magnetrades angeordnet ist. Die Leiterplatte liegt radial innerhalb eines Fixierrandes einer Lageraufnahme, der seinerseits bei zusammengebautem Motor in einen umlaufenden angepaßten Aufnahmerand des Motorgehäuses des Elektromotors eingesetzt ist.

In dem Dokument DE 91 06 064 U1 ist eine Einrichtung offenbart, bei der auf einer Rotorachse ein Permanentmagnet befestigt ist, der mehrere N- und S-Pole aufweist. Zwischen den N- und S-Polen sind zwei scheibenförmige Magnetflußführungselemente angeordnet, die jeweils ein N- und ein S-Pol darstellen, so daß zwischen ihnen ein Magnetfeld erzeugt wird. In ein S-Pol darstellen, so daß zwischen ihnen ein Magnetfeld erzeugt wird. In dem Magnetfeld ist ein Hallsensor angeordnet, der die Magnetisierungsrichtung mißt.

Bei dieser Einrichtung werden die Magnetflußführungselemente dazu verwendet, Pole der Magnete zu bilden.

Der Erfindung liegt das Problem zugrunde, eine Einrichtung zur Drehzahlmessung oder Drehrichtungserkennung eines Drehmagnetfeldes zu schaffen, die einfach aufgebaut ist.

Dieses Problem wird erfindungsgemäß durch die Merkmale des Patentanspruchs 1 gelöst. Dabei ist ein Hallsensor als IC ausgebildet und auf einer Leiterplatte befestigt. Damit die Feldlinien des Drehmagnetfeldes im Bereich des Hallsensors konzentriert sind, ist ein Magnetflußführungselement vorgesehen, das die Feldlinien des Drehmagnetfeldes anzieht und senkrecht durch die Sensorfläche des Hallsensors führt.

Vorteilhafte Ausgestaltungen der Erfindung sind in den Unteransprüchen gekennzeichnet.

Ein Ausführungsbeispiel der Erfindung ist unter Bezugnahme auf die schematischen Zeichnungen im folgenden näher erläutert. Es zeigen:
- Figur 1: einen Schnitt durch eine erfindungsgemäße Einrichtung,
- Figur 2: eine Draufsicht auf eine Leiterplatte der erfindungsgemäßen Einrichtung,
- Figuren 3 bis 5:: Magnetfeldlinienverläufe bei der Einrichtung nach Figur 1 und
- Figur 6:: einen Vergrößerten Ausschnitt eines Hallsensors und eine Magnetflußführungselements gemäß Kreis VI in Figur 5.

Elektrische Fensterheber von Kraftfahrzeugen werden durch Elektromotoren angetrieben. Für das zuverlässige Schließen und Erkennen von eingeklemmten Gegenständen ist es notwendig, die Drehzahl des Elektromotors und seine Drehrichtung zu erfassen. Zur Erfassung der Drehzahl oder der Drehrichtung wird ein Einrichtung mit einem Hallsensor mit einer entsprechenden Auswerteschaltung verwendet. Hallsensoren sind bereits hinreichend bekannt und brauchen hier nicht näher erläutert zu werden.

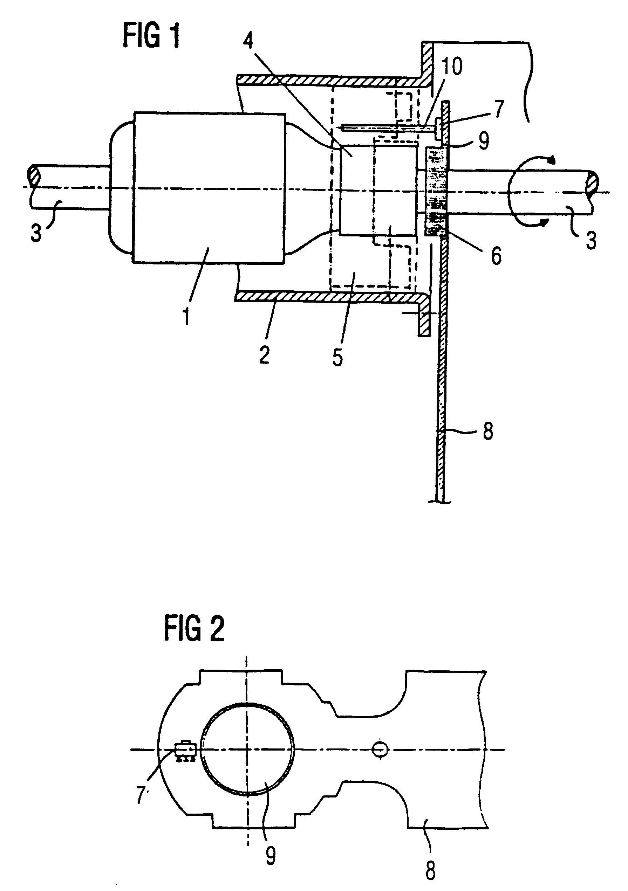

In der Figur 1 ist ein Schnitt durch eine erfindungsgemäße Einrichtung zur Drehzahlmessung oder Drehrichtungserkennung eines Drehmagnetfeldes dargestellt. Diese Einrichtung weist einen Elektromotor auf, von dem in der Figur 1 der Übersichtlichkeit halber nur der Rotor 1 (oder auch als Anker bezeichnet) und teilweise sein Motorgehäuse 2 dargestellt ist.

Der Rotor 1 ist mit einer Rotorachse 3 verbunden. Die nicht dargestellte Ankerwicklung wird über einen Kollektor 4 mit Strom versorgt. Hierzu ist der Kollektor 4 von einer Bürstenplatte 5 umgeben, die Kohle- oder Graphitbürsten mit Druckfedern aufweist, die auf dem Kollektor 4 schleifen. Somit kann über Stromanschlüsse der Bürstenplatte 5 der Strom zu der Ankerwicklung geführt werden. Wenn die Ankerwicklung bestromt wird, dreht sich der Rotor 1 mit einer bestimmten Winkelgeschwindigkeit.

Des weiteren ist auf der Rotorachse 3 ein ringförmiges Magnetrad 6 befestigt, das in Form eines Dauermagneten ausgebildet ist. Dieses Magnetrad 6 weist mindestens ein Paar von Magnetpolen auf, und zwar jeweils einen magnetischen Nordpol N und einen magnetischen Südpol S. Sobald sich die Rotorachse 3 dreht, dreht sich auch das Magnetrad 6 und mit ihm das durch den Dauermagneten erzeugte Magnetfeld. Infolgedessen wird ein Drehmagnetfeld erzeugt.

Dieses Drehmagnetfeld wird von einem Hallsensor 7 erfaßt. Die von dem Hallsensor 7 erzeugte Hallspannung, die ein Maß für die erfaßte Magnetfeldstärke ist, wird an eine elektronische Schaltung auf einer Leiterplatte 8 geliefert und dort verarbeitet. Je nach zeitlichem Verlauf der Hallspannung kann auf diese Weise die Drehzahl oder die Drehrichtung des Elektromotors erkannt werde. Mit Hilfe der Drehzahl oder der Drehrichtung kann der Elektromotor je nach Bedarf gesteuert werden.

Die Leiterplatte 8 (Figur 2) weist ein Loch 9 auf, durch das die Rotorachse 3 bei der Montage hindurchgesteckt wird. Auf der Leiterplatte 8 ist zusätzlich die Bürstenplatte 5 befestigt. Infolgedessen kann ein Strom für die Ankerwicklung über die Leiterplatte 8 und die Bürstenplatte 5 zu dem Kollektor 4 geführt werden.

Der Hallsensor 7 ist als integriertes Bauelement ausgebildet, bei dem seine Sensorfläche in einem Gehäuse untergebracht ist. Der Hallsensor 7 kann beispielsweise in einem SMD-Gehäuse (Surface Mounted Device) untergebracht sein. Die Sensorfläche ist parallel zu der Leiterplatte 8 angeordnet. Wenn die Leiterplatte 8 zur Montage über die Rotorachse 3 gesteckt wird, befindet sich das Magnetrad 6 im oder am Loch 9. Der Hallsensor 7 befindet sich unmittelbar neben dem Magnetrad 6.

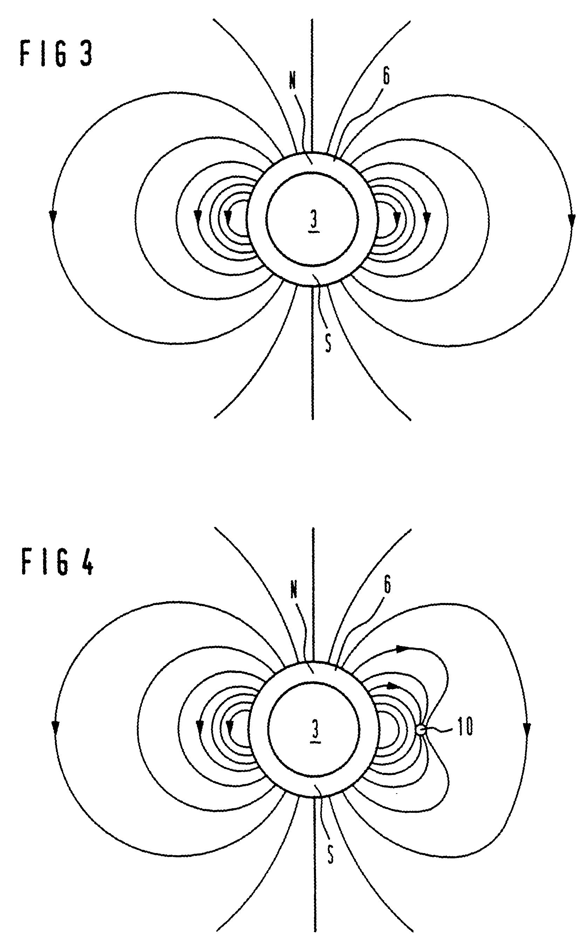

Wenn sich die Rotorachse 3 dreht, wird das Drehmagnetfeld erzeugt. In Figur 3 sind die Magnetfeldlinien in einer Schnittebene parallel zu dem Magnetrad 6 dargestellt. Die Feldlinien führen vom Nordpol N zum Südpol S. Ohne äußere Beeinflussung sind sie symmetrisch zu dem Magnetrad 6 ausgebildet.

Der Hallsensor 7 ist auf der Leiterplatte 8 so angeordnet, daß er in der Nähe des Loches 9 und nahe bei dem Magnetrad 6 liegt, damit möglichst viele Feldlinien und somit ein möglichst großes Magnetfeld von dem Hallsensor 7 erfaßt werden kann. Um die Empfindlichkeit des Hallsensors 7 zu erhöhen, d.h. um einen größeren Magnetfluß quer zu der Sensorfläche zu erzeugen, wird erfindungsgemäß ein Magnetflußführungselement 10 derart angeordnet, daß die Magnetfeldlinien im Bereich des Hallsensors 7 konzentriert werden (Figuren 4, 5 und 6).

Dieses Führungselement 10 besteht aus einem ferromagnetischen Werkstoff, d.h. mit einer hohen Permeabilität µ, wodurch innerhalb des Führungselements 10 eine hohe magnetische Flußdichte erreicht wird. Als Werkstoff kann beispielsweise Eisen, Nickel oder bekannte Legierungen davon verwendet werden. Unter diesen Werkstoffen sind weichmagnetische Werkstoffe besonders geeignet, da diese nur eine geringe Koerzitivfeldstärke aufweisen.

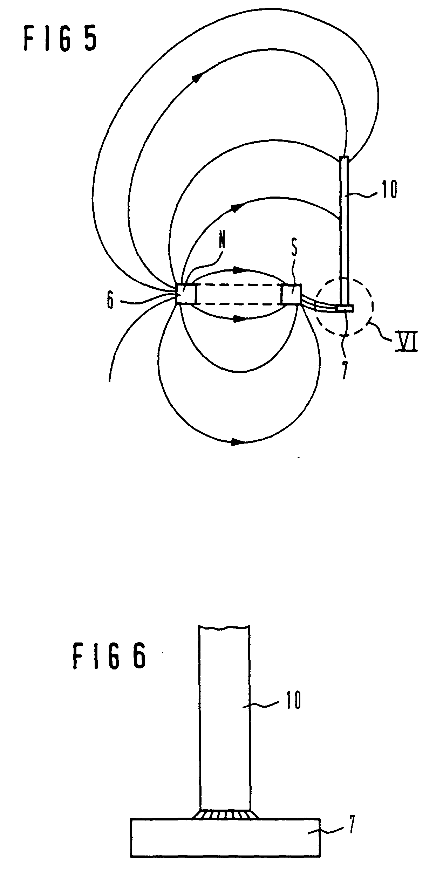

Das Führungselement 10 ist in der Nähe des Magnetrades 6 und des Hallsensors 7 angeordnet, damit eine möglichst hohe Magnetflußdichte in dem Führungselement 10 entsteht. Ein Ende des Führungselements 10 ist nahe dem Hallsensors 7 mit seiner Sensorfläche angeordnet (vgl. Figuren 5 und 6). Wie aus der Figur 6 deutlich hervorgeht, haben die Feldlinien am Ende des Führungselements 10 im Vergleich zu der Einrichtung ohne Magnetflußführungselement eine wesentlich höhere Dichte (vgl. auch Figuren 3 und 4). Je näher die Sensorfläche an das Ende des Führungselements 10 herangeführt wird, desto mehr Feldlinien kreuzen die Sensorfläche und desto empfindlicher wird der Hallsensor 7.

In der Figur 1 ist das Führungselement 10 in Form eines Stiftes oder eines Drahtes dargestellt. Das Führungselement kann auf dem Gehäuse des SMD-Hallsensors 7 befestigt sein. Es sind auch verschiedene andere Ausführungsformen möglich, bei denen die Magnetfeldlinien in der Nähe der Sensorfläche konzentriert werden und somit die Magnetflußdichte erhöht wird. Dabei kann das Führungselement 10 auch an der Bürstenplatte 5 oder der Leiterplatte 8 befestigt sein.

Die Ausgestaltung des Führungselements 10 ist nicht wesentlich für die Erfindung, sondern nur dessen Funktion, und zwar das Konzentrieren des Magnetfeldes im Bereich der Sensorfläche. Dadurch können die Drehzahl oder die Drehrichtung mit größere Empfindlichkeit erfaßt werden. Selbst kleine Drehzahlen oder nur kleine Drehrichtungsänderungen können sofort erkannt werden.

Für die Drehrichtungserkennung ist es von Vorteil, wenn mehrere Hallsensoren um das Magnetrad 6 herum verteilt auf der Leiterplatte 8 angeordnet sind.

Wenn der Hallsensor 7 als SMD-Bauelement direkt auf der Leiterplatte 8 angeordnet ist, können alle Bauelemente inklusive Hallsensor 7 einfach in einem Arbeitsgang auf der Leiterplatte 8 gelötet werden. Da der Hallsensor 7 auf die Leiterplatte 8 gelötet ist, ist ein robuster Aufbau gegeben, der unempfindlich ist gegen Erschütterungen, wie sie im Kraftfahrzeug üblich sind. Eine solche erfindungsgemäße Einrichtung gewährleistet auch eine schnelle Montage der gesamten Einrichtung.

Wenn die elektrische Verbindung zwischen der Bürstenplatte 5 und der Leiterplatte 8 als Steckverbindung ausgebildet ist, läßt sich die Leiterplatte 8 ohne großen Aufwand über die Rotorachse 3 stecken. Wenn die elektrische Verbindung zwischen den beiden Teilen als Lötverbindung ausgebildet ist, so kann die Bürstenplatte 5 zusammen mit der Leiterplatte 8 als ein einziges Bauteil über den Elektromotor gesteckt werden.

## Patentansprüche

1. Einrichtung zur Drehzahlmessung oder Drehrichtungserkennung eines Drehmagnetfeldes, mit
- einer sich drehenden Rotorachse (3), auf der ein Magnetrad (6), das einen Dauermagneten aüfweist, mit in einer radialen Ebene senkrecht zu der Rotorachse (3) angeordneten Magnetpolen (N;S) zur Erzeugung des Drehmagnetfeldes befestigt ist,
- einer eine elektronische Schaltung aufnehmenden Leiterplatte (8) in etwa senkrecht zu der Rotorachse (3),
- einem Hallsensor (7), der als integriertes Bauelement auf der Leiterplatte (8) mit parallel zu dieser verlaufenden Sensorfläche befestigt ist,
- einem axialen Magnetflußführungselement (10) hoher Permeabilität (µ), das in der Nähe des Magnetrades (6) und im wesentlichen senkrecht zu der Sensorfläche des Hallsensors (7) derart angeordnet ist, daß das Magnetfeld des Magnetrades (3) in axiale Richtung umgelenkt und die Magnetflußdichte im Bereich des Hallsensors (7) dadurch erhöht ist.

2. Einrichtung nach Anspruch 1, dadurch gekennzeichnet, daß die Rotorachse (3) den Anker (1) eines Elektromotors trägt.

3. Einrichtung nach Anspruch 1, dadurch gekennzeichnet, daß das Magnetflußführungselement (10) aus einem weichmagnetischen Werkstoff hergestellt ist.

4. Einrichtung nach Anspruch 1, dadurch gekennzeichnet, daß die Leiterplatte (8) ein Loch (9) aufweist, in dem die Rotorachse (3) und das Magnetrad (6) angeordnet sind.

5. Einrichtung nach Anspruch 1, dadurch gekennzeichnet, daß das Magnetrad (6) ringförmig ausgebildet und aus einem Dauermagneten hergestellt ist.

## Claims

1. Device for measuring the rotation speed or identifying the rotation direction of a rotating magnetic field, having
- a rotating rotor shaft (3) on which a magnet wheel (6), which has a permanent magnet, is mounted with magnet poles (N;S) arranged in a radial plane at right angles to the rotor shaft (3) in order to produce the rotating magnetic field,
- a printed circuit board (8) which accommodates an electronic circuit, approximately at right angles to the rotor shaft (3),
- a Hall sensor (7) which, as an integrated component, is mounted on the printed circuit board (8) with its sensor surface running parallel to this printed circuit board (8),
- an axial magnetic flux guiding element (10) with high permeability (µ) which is arranged in the vicinity of the magnet wheel (6) and essentially at right angles to the sensor surface of the Hall sensor (7) in such a manner that the magnetic field of the magnet wheel (3) is diverted in the axial direction, and the magnetic flux density in the region of the Hall sensor (7) is thus increased.

2. Device according to Claim 1, characterized in that the rotor shaft (3) is fitted with the armature (1) of an electric motor.

3. Device according to Claim 1, characterized in that the magnetic flux guiding element (10) is produced from a soft-magnetic material.

4. Device according to Claim 1, characterized in that the printed circuit board (8) has a hole (9) in which the rotor shaft (3) and the magnet wheel (6) are arranged.

5. Device according to Claim 1, characterized in that the magnet wheel (6) is annular, and is produced from a permanent magnet.

## Revendications

1. Dispositif de mesure de la vitesse de rotation ou de reconnaissance du sens de rotation d'un champ magnétique tournant, comportant
- un axe (3) de rotor tournant, auquel est fixée une roue (6) magnétique qui comporte un aimant permanent et qui a des pôles (N ; S) magnétiques disposés dans un plan radial perpendiculairement à l'axe (3) de rotor pour produire le champ magnétique tournant,
- une plaquette (8) à circuit imprimé de réception d'un circuit électronique à peu près perpendiculairement à l'axe (3) de rotor,
- un capteur (7) de Hall qui est fixé comme composant intégré à la plaquette (8) à circuit imprimé en ayant une surface de capteur s'étendant parallèlement à la plaquette à circuit imprimé,
- un élément (10) axial de guidage du flux magnétique de grande perméabilité (µ), qui est monté à proximité de la roue (6) magnétique et sensiblement perpendiculairement à la surface de capteur du capteur (7) de Hall de telle manière que le champ magnétique de la roue (6) magnétique est dévié dans la direction axiale et que la densité de flux magnétique dans la région du capteur (7) de Hall en est accrue.

2. Dispositif suivant la revendication 1, caractérisé en ce que l'axe (3) du rotor porte l'induit (1) d'un moteur électrique.

3. Dispositif suivant la revendication 1, caractérisé en ce que l'élément (10) de guidage du flux magnétique est produit en un matériau magnétique mou.

4. Dispositif suivant la revendication 1, caractérisé en ce que la plaquette (8) à circuit imprimé comporte un trou dans lequel sont montés l'axe (3) du rotor et la roue (6) magnétique.

5. Dispositif suivant la revendication 1, caractérisé en ce que la roue (6) magnétique est réalisée de forme annulaire et est fabriquée en aimant permanent.
